# EUROPEAN PATENT SPECIFICATION

(11) **EP 1 400 138 B1**
(45) Date of publication and mention of the grant of the patent: **11.03.2009**
(21) Application number: 02741544.7
(22) Date of filing: 25.06.2002
(51) Int. Cl.: H04W 24/04

(54) **ARRANGEMENT FOR IMPROVING THE CONNECTIVITY IN A MOBILE TELEPHONE SYSTEM**
ANORDNUNG ZUR VERBESSERUNG DER ANSCHLUSSFÄHIGKEIT IN EINEM MOBILFERNSPRECHSYSTEMEN
CONFIGURATION AMELIORANT LA CONNECTIVITE DANS UN SYSTEME DE TELEPHONIE MOBILE

(30) Priority: 25.06.2001 NO 20013195
(43) Date of publication of application: 24.03.2004
(73) Proprietor: TELEFONAKTIEBOLAGET LM ERICSSON (publ), 164 83 Stockholm (SE)
(72) Inventor: BJELLAND, Frode, N-4825 Arendal (NO); GANGSOY, Ole Johnny, N-4870 Fevik (NO)
(74) Representative: Tonscheidt, Andreas
(86) International application number: PCT/NO2002/000230
(87) International publication number: WO 2003/001830

(56) References cited:
- WO-A1-00/67499
- WO-A1-01/15479
- WO-A2-99/08392
- WO-A2-99/41926

## Description

### Technical field

The present invention relates to a method, a network, and a radio network node in a mobile telephony system and improves the connectivity between a Mobile Station (MS) and the core network. The invention is primarily applicable in packed switched networks like the General Packet Radio Service (GPRS), both for the Global System for Mobile communication (GSM) and for the Universal Mobile Transmission System (UMTS).

### Technical background

### The problem area

In a mobile telephony network, each MS is connected to a radio network node, which either can be an RNC (Radio Network Controller) when it is located in the packet switched domain or the circuit switched domain of UMTS or a BSC (Base Station Controller) when it is located in the packet switch domain or the circuit switched domain of GSM. The radio network node is connected to a node in the core network and handles signalling messages and data sent between the MS and the core network.

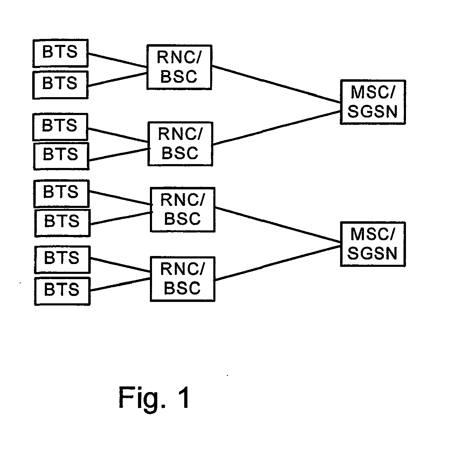

When looking at a geographical area, a radio network node being in control of this area is connected towards one and only one core network node in a certain domain, as shown in figure 1. A core network node can e.g. be a Serving General Packet Radio Service Support Node in the packet switched domain or a Mobile Services Switching Centre in the circuit switched domain. Note that an RNC or a BSC can be connected to both an MSC and a Serving General Packet Radio Service Support Node; but not to two Mobile Services Switching Centres or to two Serving General Packet Radio Service Support Nodes.

There are, however, several situations where a radio network node cannot or should not be allowed to route the signalling messages and data received from an MS to the core network node to which the MS is attached. Examples of such situations are e.g. if a radio network node cannot reach the correct core network node for a certain MS or a group of MSs due to e.g. link failure between the radio network node and the core network node or restart of the core network node. Other examples of such situations are when doing some types of reconfiguration or upgrades in the core network node.

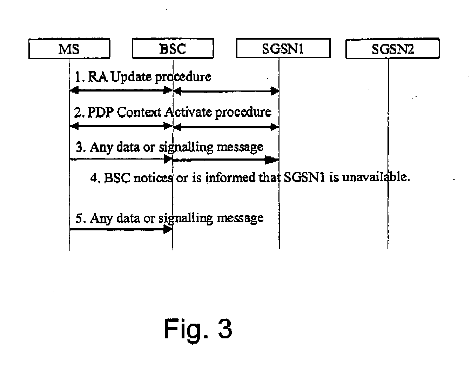

If the MS uses an unacknowledged protocol over the radio interface (most common) when such a situation occur, the MS will not be aware that the information it sends does not reach the core network node. Therefore the MS will continue to send information. This will consume unnecessary radio resources (which usually are scarce), and the MS will waste his time. Especially in the PS domain, such a situation could last for a considerable time before it is resolved. This situation is presented in figure 3.

WO 9908392 describes a method for distributing the traffic between a number of available MSC nodes in the core network of a mobile communication system. A dispatching switch is introduced between the radio network and the MSC nodes. This dispatching switch includes a switching table with one entry per mobile station, which gives the address of the correct MSC node to communicate with, for that particular mobile station. During the attachment procedure or a handover procedure, the dispatching switch decides which MSC node should be used, after consideration on the load on each node, and directs the mobile station to that node, simultaneously storing this information in said table

### Brief summary of the invention

It is an object of the present invention to provide a method, a network, and a radio network node in a mobile telephony system that ensures a practically continuous connection between a Mobile Station and the core network. In essence the solution includes connecting several core network nodes to each radio network node in a domain, and if a given core network node to which a MS is connected should fail, or that the traffic sent between the MS and the core network node should not continue for other reasons, to connect the MS to another core network node.

According to the present invention, a method as defined by claim 1, a General Packet Radio Service GPRS communication network as defined by claim 27, and a radio network node as defined by claim 28 are provided. The dependent claims define further embodiments.

As there are some fundamental differences on how GSM (Global System for Mobile Communication) GPRS (General Packet Radio Service) and how UMTS (Universal Mobile Telecommunication System) GPRS works, the solutions suggested in this invention, differ for the two access networks.

In GSM GPRS, the invention suggests that a BSC (Base Station Controller) should be able to route signalling messages and data received from an MS (Mobile Subscriber) to a new SGSN at certain situations. The BSC should be allowed to do this even when another SGSN, with which the BSC can communicate, has the data related to this MS and its ongoing calls or sessions. The new SGSN can then either order the MS to detach and re-attach, or the new SGSN can initiate a handover from the old SGSN to the new SGSN for this MS. If performing a handover for an MS from an old SGSN to a new SGSN, it is advantageously to do this at an Attach procedure or a Routing Area Update (RAU) procedure.

The reason is that these two procedures gives the points at which a GSM MS can be moved from one SGSN to another SGSN today, and hence this simplifies the required handling in the SGSN. If performing such handovers at Attach procedures or RAU procedures only, the handling in the BSC is simplified if such handovers are only performed at RAU procedures when the MS crosses a Routing Area (RA) border and at all Attach procedures. The reason for this is that the BSC can distinguish these procedures from other procedures without looking into other protocol layers than it is meant to look into. If the BSC only reroutes messages in these procedures, it can route messages with a Local TLLI (Temporary Logical Link Identity) to the old SGSN, while messages with a Foreign TLLI and/or a Random TLLI are rerouted to a new SGSN.

In UMTS GPRS, the invention suggests that the RNC have two options. One option is to forward any initial request message, i.e. Attach Request, Routing Area Update (RAU) Request and Service Request, received from the MS to a new SGSN when the RNC detects that it cannot or should not forward information received from the MS to the old SGSN to which the MS was attached. The new SGSN will then discover that it has no data on the MS. If the initial request message was a Service Request message, the new SGSN can either reject the service request, and this will lead to a detach in the MS, or the new SGSN can initiate a handover from the old SGSN. If the initial request message received in the new SGSN was an Attach Request message or a Routing Area Update (RAU) Request message, the normal procedures for these messages should be performed, and any MS data should be fetched from the old SGSN. The other option is that the RNC initiates an SRNS (Serving Radio Network Subsystem) relocation procedure to move the MS data from the old SGSN to the new SGSN.

The exact scope of the patent invention is as defined in the appended patent claims.

### Brief description of the drawings

The invention will now be described in detail in reference to the appended drawings in which:
Fig. 1 shows the relationship between RNC/BSC and SGSN/MSC in 3GPP release 4 (prior art),
Fig. 2 shows the relationship between RNC/BSC and SGSN/MSC in the new pool concept,
Fig. 3 is a sequence diagram showing a situation where a BSC is unable to route information to an SGSN, i.e. the SGSN is unavailable for the MS (GSM GPRS case),
Fig. 4 shows a situation where a RNC is unable to route information to an SGSN (UMTS GPRS),
Fig. 5 shows a situation in which a BSC initiated change of SGSN results in a re-attach from the MS (GSM GPRS),
Fig. 6 shows a BSC initiated change of SGSN resulting in a handover of the MS from SGSN 1 to SGSN 2 (GSM GPRS),
Fig. 7 shows a RNC initiated change of SGSN resulting in a re-attach from the MS (UMTS GPRS),
Fig. 8 shows a RNC initiated change of SGSN resulting in a handover of the MS from SGSN 1 to SGSN 2 (UMTS GPRS)
Fig. 9 shows a RNC initiated SRNS Relocation for a MS (UMTS GPRS).

### Detailed description of the invention

As mentioned above, currently for one geographical area a radio network node is connected towards one and only one core network node in a certain domain, as shown in figure 1.

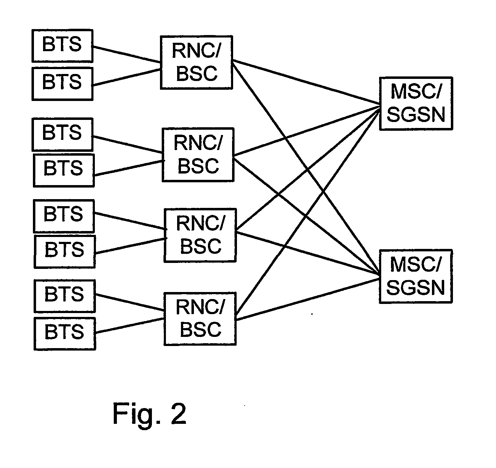

The industry has recently started looking at a concept where a radio network node can be connected towards several core network nodes of the same domain, as shown in figure 2. This has several advantages, e.g. better load sharing between core network nodes, reduced signalling in the core network, better in service performance, easier configuration handling, better scalability and easier upgrade of the nodes.

The complexity related to routing of the information received from the MS (Mobile Subscriber) to the correct core network node increases however, as the RNC or the BSC now has to determine which of the SGSNs or MSCs should receive the information that was sent from the MS. The MS is connected to one of the BTSs (Base Transceiver Station).

Figure 2 illustrates the new pool concept, i.e. that an RNC or a BSC can be connected to two or more SGSNs and/or to two or more MSCs.

To enable routing of the signalling messages and the data received from the MSs to the correct core network node, (a part of) a parameter that is assigned to the MS will contain information on which core network node allocated the parameter. This information is then included, when needed, in the information sent from the MS to the core network node. The radio network node uses this (part of a) parameter to tell which core network node the MS is (or should/could be) connected to, and hence routes the information received from the MS to the correct core network node. This parameter will most likely be the temporary identity that identifies the MS uniquely in a node, i.e. the TMSI (Temporary Mobile Subscriber Identity) in the CS (Circuit Switched) domain and the P-TMSI (Packet TMSI) in the PS (Packet Switched) domain.

An alternative solution is to introduce a new separate parameter containing information as to which core network node the MS is connected to. However, this approach has the disadvantage that the protocol between the MS and the core network node has to be updated. This means that old MSs cannot be connected to core network nodes of a pool area. Hence, it is preferred to use an already existing parameter.

In GSM GPRS, the P-TMSI is used as a base for the TLLI (Temporary Logical Link Identity) parameter. Therefore, the bits in the P-TMSI used to indicate which SGSN allocated the P-TMSI, will also be available in the TLLI to identify the same SGSN. Since the TLLI is sent in all data and signalling messages from the MS, the TLLI will be used by the BSC to route the information from the MS to the correct SGSN. Other parameters (e.g. Routing Area) can also be used in combination with this parameter to decide if the MS has already been connected to an SGSN of this pool area when an initial request is made from the MS (e.g. Routing Area Update Request or Attach Request).

In UMTS GPRS, the bits of the P-TMSI that tells which SGSN allocated the P-TMSI parameter, is sent in a separate parameter from the MS to the RNC when an initial request (i.e. Service Request, Routing Area Update Request or Attach Request) is sent from the MS. This parameter, called IDNNS (Intra Domain NAS Node Selector, where NAS means Non Access Stratum), is then used in the RNC to decide which SGSN the MS should be connected to. Other parameters (e.g. Routing Area) can also be used to decide if the MS has already been connected to an SGSN of this pool area. When the RNC receives an initial request, it will establish a signalling link towards an SGSN. Later, signalling messages sent between the RNC and the SGSN, will be sent on this link. (Note that this signalling link might be released although the PDP (Packet Data Protocol) contexts in the MS, the SGSN and the GGSN can remain. If the signalling link is released, it must be established again before it is possible to send new signalling messages.)

When a PDP (Packet Data Protocol) context is established in UMTS GPRS, two GTP (GPRS Tunnelling Protocol) tunnels are established between the RNC and the SGSN (one GTP tunnel from the RNC to the SGSN, and one GTP tunnel in the opposite direction). These two GTP tunnels are used to forward payload traffic between the RNC and the SGSN.

If the SGSN to which the MS was last connected is located in another SGSN pool area (collection of SGSNs all covering the same geographical area), the RNC/BSC can in principle select any SGSN in the current pool area. However, to simplify the selection mechanism in the RNC/BSC, the RNC/BSC can select the SGSN within the pool which have the current P-TMSI value of the MS (and hence also the TLLI value or IDNNS value) within its value range for the P-TMSI parameter, irrespective of whether the P-TMSI parameter was allocated within or outside the SGSN pool area. If the SGSN to which the MS was last connected is located in the current SGSN pool area, the RNC/BSC should preferably select the same SGSN.

The handling described in the previous sections will work fine for UMTS GPRS and GSM GPRS under normal conditions, and signalling messages and data received from or sent to the MSs will be handled correct.

There are, however, several situations where a BSC/RNC cannot or should not be allowed to route the signalling messages and data received from an MS to the SGSN to which the MS is attached, or to the SGSN to which the MS normally should have become attached to within the SGSN pool. Examples of such situations are when:
- A fault occurs in an SGSN or on the link between an SGSN and a radio network node.
- A restart occurs in an SGSN.
- Operation and maintenance work is required on an SGSN or on the link between an SGSN and a radio network node.
- Upgrade of an SGSN is required.
- Traffic should be moved from one SGSN to another SGSN due to e.g. unbalanced load between the SGSNs.

As mentioned above, when such a situation occur in GSM GPRS, the MS will normally not be aware for a considerable time that the information it sends does not reach the core network node. This situation is shown in figure 3.

In step 1 the MS roams into a new area with a pool of two SGSNs. The MS performs a successful Routing Area Update procedure (for simplicity the whole procedure is not shown here, but it can be found in 3GPP TS 23.060) and becomes connected to SGSN 1. In this procedure SGSN 1 assigns a new P-TMSI value to the MS if this is required (this might not be required if the P-TMSI for the MS was allocated by this SGSN). A part of this parameter identifies SGSN 1 uniquely within this pool of SGSNs.

In the uplink direction (from MS to SGSN) the TLLI parameter is used, and this parameter is constructed from the P-TMSI parameter. The BSC can therefore use a part of the TLLI parameter to route the data and signalling messages from the MS to the SGSN 1. In step 2 the MS activates a PDP context. (For simplicity the whole procedure is not shown here, but it can be found in 3GPP TS 23.060.)

In step 3 the BSC uses a part of the TLLI parameter to route the data or signalling messages to SGSN 1.

In step 4 the BSC notices itself or is informed by a signalling message or via operation and maintenance that SGSN 1 is not or should not be reachable for some or all values of the part of the P-TMSI parameter (and therefore TLLI as well) that identifies SGSN 1.

In step 5 it is shown that the BSC receives some data or a signalling message, and that it is unable to forward this information to SGSN 1. Since the BSC is unable to inform the MS of the situation, the situation will last till the MS or the subscriber itself requires a response from SGSN 1. This situation can last for a considerable time.

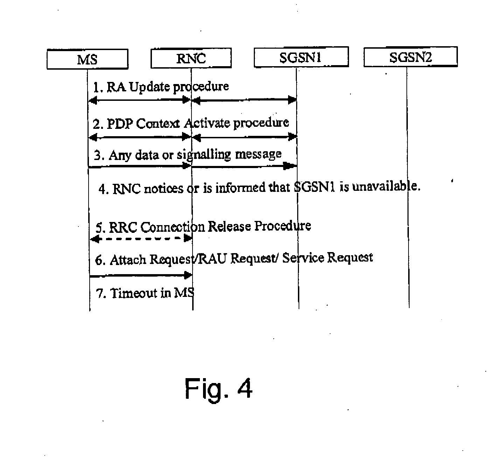

In UMTS GPRS the RNC is able to perform a release of the radio resources between the MS and the RNC when the RNC notices itself or is told that SGSN 1 is not or should not be reachable for some or all traffic for some or all value ranges of the part of the P-TMSI parameter (and therefore IDNNS as well) that identifies SGSN 1. But it cannot perform any action on the MM (Mobility Management) context and the PDP (Packet Data Protocol) contexts of an MS. A sequence for this is shown in figure 4.

In step 1 the MS roams into a new area with a pool of two SGSNs. The MS performs a successful Routing Area Update procedure (for simplicity the whole procedure is not shown here, but it can be found in 3GPP TS 23.060) and becomes connected to SGSN 1. In this procedure SGSN 1 assigns a new P-TMSI value to the MS (this might not be required if the P-TMSI for the MS was allocated by this SGSN). A part of this parameter identifies SGSN 1 uniquely within this pool of SGSNs.

In UMTS GPRS the bits of the P-TMSI that tells which SGSN allocated the P-TMSI parameter, is sent in a separate parameter from the MS to the RNC when an initial request (i.e. Service Request, Routing Area Update Request or Attach Request) is sent from the MS. This parameter, called IDNNS, is then used in the RNC to decide which SGSN the MS should be connected to. Other parameters (e.g. Routing Area) can also be used to decide if the MS has already been connected to an SGSN of this pool area. When the RNC receives an initial request, it will establish a signalling link towards an SGSN. Later, signalling messages sent between the RNC and the SGSN, will be sent on this link. (Note that this signalling link might be released although the PDP contexts in the MS, the SGSN and the GGSN (Gateway GPRS Support Node) can remain.)

In step 2 the MS establishes a PDP context. (For simplicity the whole procedure is not shown here, but it can be found in 3GPP TS 23.060.) This will result in the establishment of two GTP tunnels between the RNC and the SGSN (one GTP tunnel from the RNC to the SGSN, and one GTP tunnel in the opposite direction). These two GTP tunnels are used to forward payload traffic between the RNC and the SGSN.

In step 3 the MS sends a data or a signalling message to the RNC, and the RNC forwards it on the established GTP tunnel or signalling link towards SGSN 1.

In step 4 the RNC notices itself or is told that SGSN 1 is not reachable for some or all traffic from some or all value ranges of the part of the P-TMSI parameter (and therefore IDNNS as well) that identifies SGSN 1.

Step 4 might trigger the RRC (Radio Resource Control) Connection Release procedure (as described in 3GPP TS 25.331) for some or all contexts residing in the RNC, as shown in step 5. This means that the connection from the MS to the RNC is released, but the MM (Mobility Management) context and the PDP contexts of the MS are still active in the MS, and if possible, also in SGSN 1.

In step 6 the MS sends an initial request message, i.e. one of the GMM (GPRS MM) messages Attach Request, RAU Request or Service Request to the RNC. (The Attach procedure, the RAU procedure and the Service Request procedure is described in 3GPP TS 23.060 and 3GPP TS 24.008.) The RNC is unable to forward this message to SGSN 1.

Eventually a timer times out in the MS, as shown in step 7. The MS must then wait, before repeating step 6.

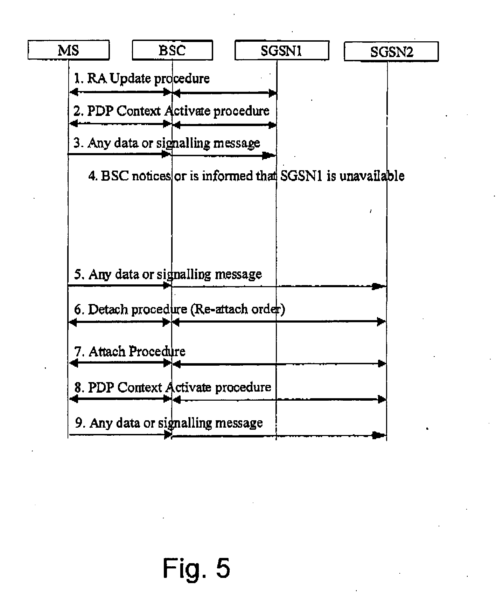

However, the inventors have found that the introduction of the pool concept, in which each RNC or BSC is connected to several SGSNs can offer a solution to the problem described above. The inventive solution will be described in detail in the following. Due to the large differences between the GSM GPRS and UMTS GPRS systems, separate embodiments of the invention for the two systems will be described in reference to Fig. 5, 6 and 7, 8, 9 respectively.

In GSM GPRS, the invention suggests that the BSC should forward any signalling message and data message received from an MS to a new SGSN (SGSN 2) when it detects that it cannot or should not forward information received from the MS to the old SGSN (SGSN 1) to which the MS was attached. If the reason for rerouting to a new SGSN is that the BSC cannot communicate with the old SGSN, the rerouting might be done when a 'guard' timer has expired in the radio network node, to avoid rerouting at transient fault situations.

The new SGSN (SGSN 2) receiving a signalling message (other than an initial signalling message like e.g. Routing Area Update Request or Attach Request) or data message from a GSM MS that is not already connected to this SGSN, can order the MS to disconnect itself from and re-connect to the network again, as shown in figure 5. This solution is done when it is either impossible to fetch data for the MS from the old SGSN, or when it is perceived the best and simplest solution.

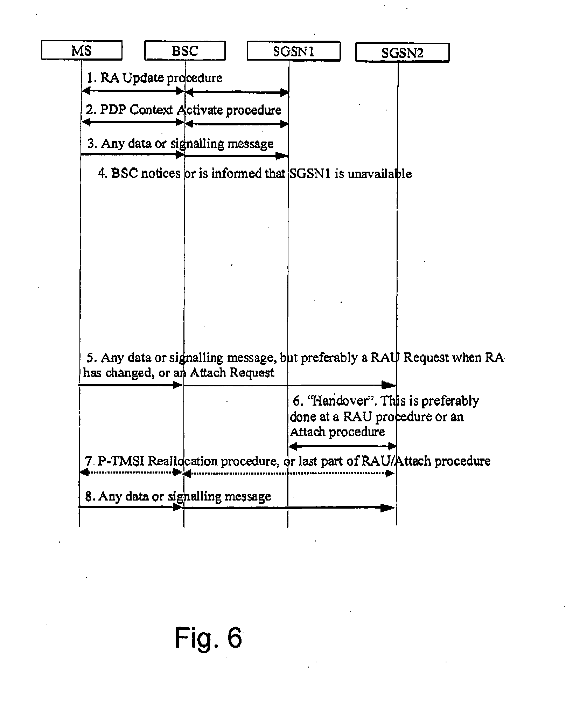

Alternatively, the new SGSN can initiate a handover of the MS and its already activated calls or sessions from the old SGSN (SGSN 1), as shown in figure 6. If performing a handover for an MS from an old SGSN to a new SGSN, it is advantageously to do this at an Attach procedure or a Routing Area Update (RAU) procedure. The reason is that these two procedures gives the points at which a GSM MS can be moved from one SGSN to another SGSN today, and hence this simplifies the required handling in the SGSN. If performing such handovers at Attach procedures or RAU procedures only, the handling in the BSC is simplified if such handovers are only performed at RAU procedures when the MS crosses a Routing Area (RA) border and at all Attach procedures. The reason for this is that the BSC can distinguish these procedures from other procedures without looking into other protocol layers than it is meant to look into. If the BSC only reroutes messages in these procedures, it can route messages with a Local TLLI (Temporary Logical Link Identity) to the old SGSN, while messages with a Foreign TLLI and/or a Random TLLI are rerouted to a new SGSN. This means that it in the BSC should be possible to configure one routing for messages with a Local TLLI, and to have the possibility to configure another routing for messages with a Foreign TLLI and/or a Random TLLI. (If wanted, the messages with a Foreign TLLI can also be routed differently from the messages with a Random TLLI.)

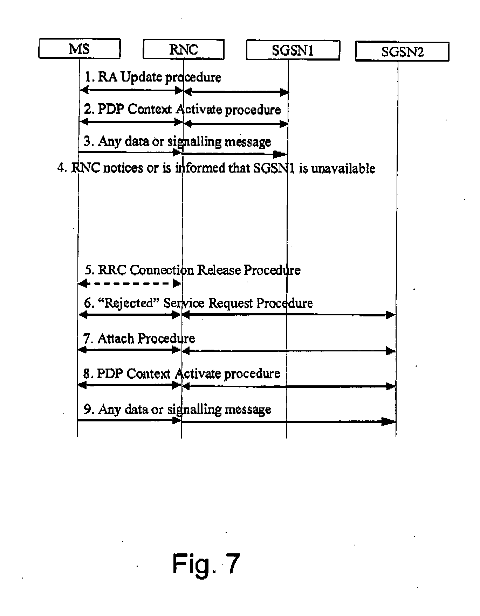

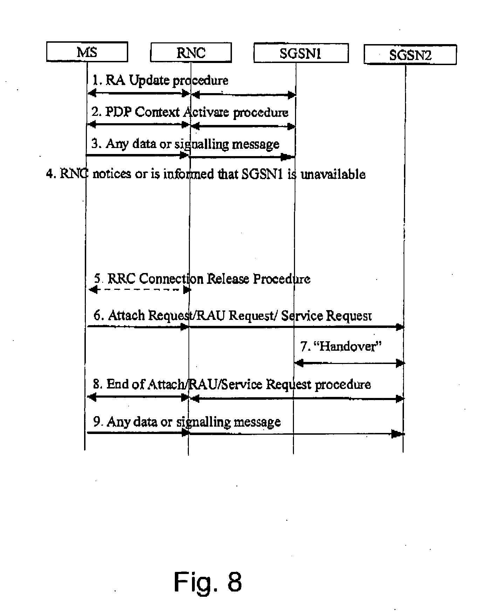

In UMTS GPRS, the invention suggests that the RNC have two options. One option is to forward any initial request message, i.e. Attach Request, Routing Area Update (RAU) Request and Service Request, received from the MS to a new SGSN (SGSN 2) when the RNC detects that it cannot or should not forward information received from the MS to the old SGSN (SGSN 1) to which the MS was attached. The new SGSN (SGSN 2) will then discover that it has no data on the MS. If the initial request message was a Service Request message, the new SGSN (SGSN 2) can either reject the service request, and this will lead to a detach in the MS as shown in figure 7, or the new SGSN (SGSN 2) can initiate a handover from the old SGSN (SGSN 1) as shown in figure 8. If the initial request message was an Attach Request message or a Routing Area Update (RAU) Request message, the normal procedures for these messages should be performed, and any MS data should be fetched from the old SGSN (SGSN 1) as shown in figure 8. The solution shown in figure 7 is done when it is either impossible to fetch data for the MS from the old SGSN, or when it is perceived the best and simplest solution.

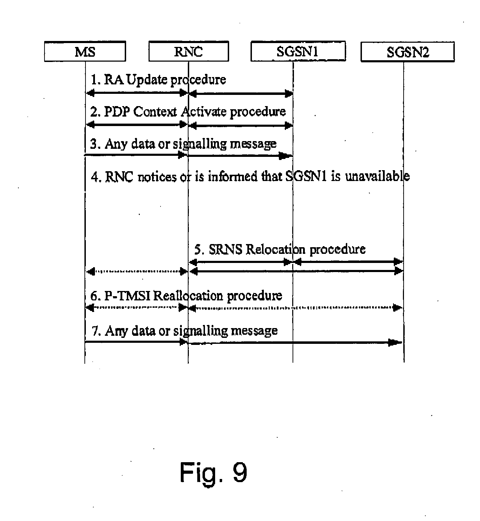

The other option (shown in figure 9) is that the RNC initiates an SRNS relocation procedure to move the MS data from the old SGSN to the new SGSN, and here the same RNC should preferably be kept.

The solutions shown in figure 8 and 9 will only be possible to apply for some of the cases mentioned in the introduction and on page 8, as both the link between the old SGSN and the RNC as well as the old SGSN must be up and running.

In other words, the embodiments described in Fig. 6, 8 and 9 involve a controlled handover of the MS from one SGSN to another SGSN. To obtain this, the old SGSN must still be in operation. If this is not the case, another approach has to be followed, as described in Fig. 5 and 7, and hence figure 7 is not limited to the Service Request procedure. Each embodiment will now be described in still further detail.

### New SGSN orders detach of MS in GSM GPRS (Fig. 5)

In step 1 the MS roams into a new area with a pool of two SGSNs. The MS performs a successful Routing Area Update procedure (for simplicity, the whole procedure is not shown here, but it can be found in 3GPP TS 23.060) and becomes connected to SGSN 1. In this procedure SGSN 1 assigns the P-TMSI parameter to the MS. A part of this parameter identifies SGSN 1 uniquely within this pool of SGSNs. In the uplink direction (from MS to SGSN) the TLLI parameter is used, and this parameter is constructed from the P-TMSI parameter. The BSC can therefore use a part of the TLLI (or P-TMSI) parameter to route the data and signalling messages from the MS to the SGSN 1.

In step 2 the MS activates a PDP context. (For simplicity the whole procedure is not shown here, but it can be found in 3GPP TS 23.060.)

In step 3 the BSC uses a part of the TLLI parameter to route the data or signalling message to SGSN 1.

Step 1 to 3 is not mandatory for the invention. They just show an example of the signalling that can be sent between an MS and an SGSN that belongs to an SGSN pool. The important point is that SGSN 1 contains some data for one or more MSs.

In step 4 the BSC notices itself or is informed by a signalling message or via operation and maintenance that SGSN 1 is not or should not be reachable for some or all traffic for some or all values of the part of the P-TMSI parameter (and therefore TLLI as well) that identifies SGSN 1. The BSC may therefore route the next MS originated data or signalling message to a new SGSN, SGSN 2 as shown in step 5.

Since SGSN 2 does not have any data on this MS, it initiates a Detach procedure for the MS (for simplicity, the whole procedure is not shown here, but it can be found in 3GPP TS 23.060) with indication that it wants the MS to re-attach. This is shown in step 6.

In step 7 the MS re-attaches (for simplicity, the whole procedure is not shown here, but it can be found in 3GPP TS 23.060.), and it gets connected to SGSN 2. In this procedure SGSN 2 assigns a new P-TMSI value to the MS.

In step 8 the MS activates a PDP context. (For simplicity the whole procedure is not shown here, but it can be found in 3GPP TS 23.060.)

The BSC route the next data or signalling message received from the MS to the new SGSN, SGSN 2. This is shown in step 9.

### New SGSN performs handover for an MS in GSM GPRS (Fig. 6)

In step 1 the MS roams into a new area with a pool of two SGSNs. The MS performs a successful Routing Area Update procedure (for simplicity, the whole procedure is not shown here, but it can be found in 3GPP TS 23.060) and becomes connected to SGSN 1. In this procedure SGSN 1 assigns the P-TMSI parameter to the MS. A part of this parameter identifies SGSN 1 uniquely within this pool of SGSNs. In the uplink direction (from MS to SGSN) the TLLI parameter is used, and this parameter is constructed from the P-TMSI parameter. The BSC can therefore use a part of the TLLI (or P-TMSI) parameter to route the data and signalling messages from the MS to the SGSN 1.

In step 2 the MS activates a PDP context. (For simplicity the whole procedure is not shown here, but it can be found in 3GPP TS 23.060.)

In step 3 the BSC uses a part of the TLLI parameter to route the data or signalling message to SGSN 1.

Step 1 to 3 is not mandatory for the invention. They just show an example of the signalling that can be sent between an MS and an SGSN that belongs to an SGSN pool. The important point is that SGSN 1 contains some data for one or more MSs.

In step 4 the BSC notices itself or is informed by a signalling message or via operation and maintenance that SGSN 1 is not or should not be reachable for some or all traffic for some or all values of the part of the P-TMSI parameter (and therefore TLLI as well) that identifies SGSN 1. The BSC will therefore route the next MS originated data or signalling message that contains such a TLLI value to a new SGSN, SGSN 2 as shown in step 5.

A preferred alternative in step 5, is that the BSC only re-routes signalling messages (and data messages) that contain a Foreign TLLI (Temporary Logical Link Identifier) and a Random TLLI to a new SGSN (SGSN 2). This means that messages sent within a RAU procedure when the Routing Area has changed and messages sent within an Attach procedure are re-routed to the new SGSN (SGSN 2), while the signalling messages and data messages that contain a Local TLLI will continue to be routed towards the old SGSN (SGSN 1). In order to get this differentiated routing in the BSC dependent on the type of TLLI in the MS originated messages, it should be possible in the BSC to configure one routing for messages with a Local TLLI, and to have the possibility to configure another routing for messages with a Foreign TLLI and/or a Random TLLI. (If wanted, the messages with a Foreign TLLI can also be routed differently from the messages with a Random TLLI.) Such a differentiated routing in the BSC allows for a more controlled handover of MSs from one SGSN to another one, since there will be no interruption in any ongoing data- or payload-traffic. Hence, this gives a good mechanism for MS re-distribution from one SGSN to another one. In order to increase the number of MSs sending a message with a Foreign TLLI or Random TLLI, the old SGSN (SGSN 1) can initiate the Detach procedure (as described in 3GPP TS 23.060) for some or all MSs. This will speed up the process of moving MSs to the new SGSN (SGSN 2), since these MSs then will perform an Attach procedure using a Foreign TLLI. The BSC should preferably forward the re-routed messages received from the MSs as it would have done if the messages should have been sent towards the old SGSN (SGSN 1). But the BSC might insert extra parameters when forwarding the message to the new SGSN (SGSN 2). One parameter could be inserted into the message to inform SGSN 2 that it should try to perform a handover of MS data from SGSN 1 to SGSN 2.

SGSN 2 preferably initiates a handover as shown in step 6 when the received message in step 5 is a RAU Request message or an Attach Request message, but SGSN 2 might also initiate a handover when receiving other signalling or data messages.

In case SGSN 2 receives an Attach Request message or a RAU Request message in step 5, a normal Attach procedure or RAU procedure, respectively, will be performed in step 5, 6 and 7, only that SGSN 2 uses the old P-TMSI (or TLLI) and the old RA to determine that the MS previously was attached to SGSN 1. Step 7 will in this case contain the last part of this Attach or RAU procedure. These procedures will be performed according to the corresponding procedures described in 3GPP TS 23.060, although, for simplicity, the whole procedures are not shown in figure 6.

In case the first received message from the MS to SGSN 2 in step 5 is a data message or any other signalling message than Attach Request and RAU Request, SGSN 2 can recognise that this MS belongs to SGSN 1 (e.g. due to the value of the TLLI parameter), and it can therefore initiate a handover of the MS data from SGSN 1 to SGSN 2, as shown in step 6. For simplicity, the whole procedure is not shown here, but it can be based on the Routing Area Update procedure as defined in 3GPP TS 23.060, with the exception of the signalling messages towards the MS, which are not required in this case. Step 7 is optional in case any other message than an Attach Request or a RAU Request was received in step 5, and it is only done to supply a new P-TMSI value to the MS. This can e.g. be done with the P-TMSI Reallocation procedure (for simplicity, the whole procedure is not shown here, but it can be found in 3GPP TS 23.060).

The BSC route the next data or signalling message received from the MS to the new SGSN (SGSN 2) as shown in step 8.

### New SGSN orders detach of MS in UMTS GPRS (Fig. 7)

In step 1 the MS roams into a new area with a pool of two SGSNs. The MS performs a successful Routing Area Update procedure (for simplicity the whole procedure is not shown here, but it can be found in 3GPP TS 23.060) and becomes connected to SGSN 1. In this procedure SGSN 1 assigns a new P-TMSI value to the MS (this might not be required if the P-TMSI for the MS was allocated by this SGSN). A part of this parameter identifies SGSN 1 uniquely within this pool of SGSNs.

In UMTS GPRS, or to be accurate in Iu mode, the bits of the P-TMSI that tells which SGSN allocated the P-TMSI parameter, is sent in a separate parameter from the MS to the RNC when an initial request (e.g. Routing Area Update Request or Attach Request) is sent from the MS. This parameter is then used in the RNC to decide which SGSN the MS should be connected to. Other parameters (e.g. Routing Area) can also be used to decide if the MS has already been connected to an SGSN of this pool area. When the RNC receives an initial request, it will establish a signalling link towards an SGSN. Later, signalling messages sent between the RNC and the SGSN, will be sent on this link. (Note that this signalling link might be released although the PDP contexts in the MS, the SGSN and the GGSN can remain.)

In step 2 the MS establishes a PDP context. (For simplicity the whole procedure is not shown here, but it can be found in 3GPP TS 23.060.) This will result in the establishment of two GTP tunnels between the RNC and the SGSN (one GTP tunnel from the RNC to the SGSN, and one GTP tunnel in the opposite direction). These two GTP tunnels are used to forward payload traffic between the RNC and the SGSN.

In step 3 the MS sends a data or a signalling message to the RNC, and the RNC forwards it on the established GTP tunnel or signalling link towards SGSN 1.

Step 1 to 3 is not mandatory for the invention. They just show an example of the signalling that can be sent between an MS and an SGSN that belongs to an SGSN pool. The important point is that SGSN 1 contains some data for one or more MSs.

In step 4 the RNC notices itself or is informed by a signalling message or via operation and maintenance that SGSN 1 is not or should not be reachable for some (or all) values of the part of the P-TMSI parameter (and therefore also of the IDNNS parameter) that identifies SGSN 1.

Step 4 might trigger the RRC Connection Release procedure (as described in 3GPP TS 25.331) for all or for some contexts residing in the RNC, as shown in step 5. This means that the connection from the MS to the RNC is released, but the MM (Mobility Management) context and the PDP contexts of the MS are still active in the MS, and in the old SGSN (SGSN 1) if possible.

In step 6 an MS that should be re-distributed from SGSN 1 to SGSN 2 sends a message containing the GMM (GPRS MM) message 'Service Request' to the RNC. (The Service Request procedure is described in 3GPP TS 23.060 and 3GPP TS 24.008.) The RNC therefore forward this message to SGSN 2. Since SGSN 2 does not have any data on this MS, it rejects the Service Request procedure for the MS.

In step 7 the MS re-attaches (for simplicity, the whole procedure is not shown here, but it can be found in 3GPP TS 23.060.), and it gets connected to SGSN 2. In this procedure SGSN 2 assigns a new P-TMSI value to the MS.

In step 8 the MS activates a PDP context. (For simplicity the whole procedure is not shown here, but it can be found in 3GPP TS 23.060.)

The RNC routes the next data or signalling message received from the MS to the new SGSN, SGSN 2. This is shown in step 9.

### New SGSN performs handover for an MS in UMTS GPRS (Fig. 8)

In step 1 the MS roams into a new area with a pool of two SGSNs. The MS performs a successful Routing Area Update procedure (for simplicity the whole procedure is not shown here, but it can be found in 3GPP TS 23.060) and becomes connected to SGSN 1. In this procedure SGSN 1 assigns a new P-TMSI value to the MS (this might not be required if the P-TMSI for the MS was allocated by this SGSN). A part of this parameter identifies SGSN 1 uniquely within this pool of SGSNs.

In UMTS GPRS the bits of the P-TMSI that tells which SGSN allocated the P-TMSI parameter, is sent in a separate parameter from the MS to the RNC when an initial request (i.e. Service Request, Routing Area Update Request or Attach Request) is sent from the MS. This parameter is then used in the RNC to decide which SGSN the MS should be connected to. Other parameters (e.g. Routing Area) can also be used to decide if the MS has already been connected to an SGSN of this pool area. When the RNC receives an initial request, it will establish a signalling link towards an SGSN. Later, signalling messages sent between the RNC and the SGSN, will be sent on this link. (Note that this signalling link might be released although the PDP contexts in the MS, the SGSN and the GGSN can remain. The signalling link must then be re-established before sending any new messages.)

In step 2 the MS establishes a PDP context. (For simplicity the whole procedure is not shown here, but it can be found in 3GPP TS 23.060.) This will result in the establishment of two GTP tunnels between the RNC and the SGSN (one GTP tunnel from the RNC to the SGSN, and one GTP tunnel in the opposite direction). These two GTP tunnels are used to forward payload traffic between the RNC and the SGSN.

In step 3 the MS sends a data or a signalling message to the RNC, and the RNC forwards it on the established GTP tunnel or signalling link towards SGSN 1.

Step 1 to 3 is not mandatory for the invention. They just show an example of the signalling that can be sent between an MS and an SGSN that belongs to an SGSN pool. The important point is that SGSN 1 contains some data for one or more MSs.

In step 4 the RNC notices itself or is informed by a signalling message or via operation and maintenance that SGSN 1 is not or should not be reachable for some or all values of the part of the P-TMSI parameter (and hence also for the IDNNS parameter) that identifies SGSN 1.

Step 4 might trigger the RRC Connection Release procedure (as described in 3GPP TS 25.331) for all or for some contexts residing in the RNC, as shown in step 5. This means that the connection from the MS to the RNC is released, but the MM (Mobility Management) context and the PDP contexts of the MS are still active in the MS, and in the old SGSN (SGSN 1) if possible.

In step 6 the MS sends an initial request message (i.e. either an Attach Request, a RAU Request or a Service Request), and the RNC routes the initial request message to the new SGSN (SGSN 2).

In case SGSN 2 receives an Attach Request message or a RAU Request message, SGSN 2 will perform a normal Attach procedure or RAU procedure, respectively, in step 7 and 8, only that it uses the old P-TMSI (or TLLI) and the old RA to determine that the MS previously was attached to SGSN 1. These procedures will be performed according to the corresponding procedures described in 3GPP TS 23.060, although for simplicity, the whole procedures are not shown in figure 8.

In case SGSN 2 receives a Service Request message, SGSN 2 can recognise that this MS belongs to SGSN 1 (e.g. due to the value of the P-TMSI parameter), and it can therefore initiate a handover of the MS data from SGSN 1 to SGSN 2, as shown in step 7. For simplicity, the whole procedure is not shown here, but it can be based on the Routing Area Update procedure as defined in 3GPP TS 23.060, with the exception of the signalling messages towards the MS, which are not required in this case. Step 8 is the end of the Service Request procedure. This means that both the Service Request procedure as described in 3GPP TS 23.060 is performed as well as a simplified procedure of the RAU procedure in step 6, 7 and 8. The MS should also receive a new P-TMSI value from the new SGSN (SGSN 2). This can e.g. be done with the P-TMSI Reallocation procedure as described in 3GPP TS 23.060.

The RNC routes the next data or signalling message received from the MS to the new SGSN (SGSN 2) as shown in step 9.

### RNC initiates SRNS Relocation in UMTS GPRS (Fig. 9)

In step 1 the MS roams into a new area with a pool of two SGSNs. The MS performs a successful Routing Area Update procedure (for simplicity the whole procedure is not shown here, but it can be found in 3GPP TS 23.060) and becomes connected to SGSN 1. In this procedure SGSN 1 assigns a new P-TMSI value to the MS (this might not be required if the P-TMSI for the MS was allocated by this SGSN). A part of this parameter identifies SGSN 1 uniquely within this pool of SGSNs.

In UMTS GPRS the bits of the P-TMSI that tells which SGSN allocated the P-TMSI parameter, is sent in a separate parameter from the MS to the RNC when an initial request (i.e. Service Request, Routing Area Update Request or Attach Request) is sent from the MS. This parameter is then used in the RNC to decide which SGSN the MS should be connected to. Other parameters (e.g. Routing Area) can also be used to decide if the MS has already been connected to an SGSN of this pool area. When the RNC receives an initial request, it will establish a signalling link towards an SGSN. Later, signalling messages sent between the RNC and the SGSN will be sent on this link. (Note that this signalling link might be released although the PDP contexts in the MS, the SGSN and the GGSN can remain. The signalling link must then be re-established before sending any new messages.)

In step 2 the MS establishes a PDP context. (For simplicity the whole procedure is not shown here, but it can be found in 3GPP TS 23.060.) This will result in the establishment of two GTP tunnels between the RNC and the SGSN (one GTP tunnel from the RNC to the SGSN, and one GTP tunnel in the opposite direction). These two GTP tunnels are used to forward payload traffic between the RNC and the SGSN.

In step 3 the MS sends a data or a signalling message to the RNC, and the RNC forwards it on the established GTP tunnel or signalling link towards SGSN 1.

Step 1 to 3 is not mandatory for the invention. They just show an example of the signalling that can be sent between an MS and an SGSN that belongs to an SGSN pool. The important point is that SGSN 1 contains some data for one or more MSs.

In step 4 the RNC notices itself or is informed by a signalling message or via operation and maintenance that SGSN 1 is not reachable for some (or all) values of the part of the P-TMSI parameter (and therefore also for the IDNNS parameter) that identifies SGSN 1.

Step 4 can then trigger the SRNS Relocation procedure (as described in 3GPP TS 23.060) for all or some contexts residing in the RNC, as shown in step 5. This procedure can also be initiated for an MS when the MS sends any data or signalling message to the RNC. When the SRNS Relocation procedure is executed for an MS, the MM context and the PDP contexts for the MS are moved from SGSN 1 to SGSN 2. This procedure can be performed with and without MS involvement, but here it should preferably be done without MS involvement. Also, the existing procedure can be modified slightly so that no messages are sent towards the MS in this case. As stated in the previous sentence, the SRNS Relocation procedure is an existing procedure that here is suggested to be used in a new way. It is also suggested that the target RNC, or target ID, in the Relocation Required message (which is the first message being sent in this procedure, and it is sent from the source RNC to the source SGSN, SGSN 1) should be set equal to the source RNC, or source ID. In this way the RNC is not changed, only the SGSN. (Today this procedure involves two different RNCs, the source RNC and the target RNC.)

Today the source SGSN (SGSN 1) uses the target RNC or the target ID to decide which SGSN should be the target SGSN (i.e. the new SGSN). When using the SRNS Relocation procedure for this purpose, the RNC could include an additional and new parameter in the Relocation Required message to indicate which SGSN the MS should be attached to after the SRNS Relocation procedure. This could be helpful e.g. in the case where the RNC has the knowledge of the load of the different SGSNs in the pool area. Alternatively, the source SGSN can itself figure out that a change of SGSN is required when the source SGSN receives the Relocation Required message. The SGSN can figure this out based on other operations performed on the SGSN, e.g. some operation and maintenance work is initiated in the SGSN. Yet another alternative, is that the source RNC includes a new and additional parameter telling that a change of SGSN is required, but it is up to the SGSN to determine the new (target) SGSN.

As an alternative to use the SRNS Relocation procedure in step 5, a new but similar procedure could be defined to move the MM context and the PDP contexts for an MS to a new SGSN.

Step 6 is optional, and it is only done to supply a new P-TMSI value to the MS. This can e.g. be done with the P-TMSI Reallocation procedure (for simplicity, the whole procedure is not shown here, but it can be found in 3GPP TS 23.060).

In step 7 the RNC routes the next data or signalling message received from the MS to the new SGSN, SGSN 2.

This solution reduces unnecessary signalling messages and data sent over the air interface when an SGSN cannot or should not be reached for an MS or a group of MSs, and at the same time the radio network node is connected to several SGSNs.

Also, this solution enables a (close to) seamless handover of MS data and calls or sessions from one SGSN to another when one SGSN cannot or should not be reached for an MS or a group of MSs, and at the same time the radio network node is connected to several SGSNs. This means that the solution gives a higher in service performance for the network.

In this invention, a part of the P-TMSI parameter (and therefore also the TLLI parameter in GSM GPRS) is used to identify which core network node the MS should be connected to. Other parameters might be used for this purpose.

If the new SGSN initiates a handover of an MS and its already activated sessions from the old SGSN in GSM GPRS, as shown in figure 6, the new SGSN must determine which SGSN to contact. This can be done in several ways. Either the radio network node can append a parameter identifying the SGSN to contact, or a parameter sent from the MS can be used to identify the SGSN to contact. The new SGSN might need a mapping table between (the part of a) parameter that identifies the core network nodes and their real address.

Although only described for GSM GPRS and UMTS GPRS, the solutions are equally applicable for GERAN (GSM-EDGE Radio Access Network, where EDGE stands for Enhanced Data rates for GSM Evolution).

### References

| | |
|---|---|
| 3GPP TS 23.060 v3.6.0 (2001-01) | 3rd Generation Partnership Project; Technical Specification Group Services and System Aspects; General Packet Radio Service (GPRS); Stage 2 (Release 1999) |
| 3GPP TS 24.008 v3.5.0 (2000-09) | 3rd Generation Partnership Project; Technical Specification Group Core Network; Mobile radio interface layer 3 specification; Core Network Protocols - Stage 3 (Release 1999) |
| 3GPP TS 25.331 v4.0.0 (2001-03) | 3rd Generation Partnership Project; Technical Specification Group Radio Access Network; RRC Protocol Specification (Release 4) |
| 3GPP TS 25.413 v3.4.0 (2000-12) | 3rd Generation Partnership Project; Technical Specification Group Radio Access Network; UTRAN Iu Interface RANAP Signalling; (Release 1999) |

### Detailed Description of step 4 in Figures 3-9:

Step 4 in Fig. 3: BSC notices itself or is informed by a signalling message or via Operation and Maintenance that SGSN1 is unavailable.
Step 4 in Fig. 4: RNC notices itself or is informed by a signalling message or via Operation and Maintenance that SGSN1 is unavailable.
Step 4 in Fig. 5: BSC notices itself or is informed by a signalling message or via Operation and Maintenance that SGSN1 is unavailable for some or all values of the TLLI parameter.
   Therefore the BSC will route the next MS originated data or signalling message that contains such a TLLI to another SGSN.
Step 4 in Fig. 6: BSC notices itself or is informed by a signalling message or via Operation and Maintenance that SGSN1 is unavailable for some or all values of the TLLI parameter.
   Therefore the BSC will route the next MS originated data or signalling message that contains such a TLLI parameter to another SGSN.
   A preferred alternative is that the BSC only re-routes signalling messages (and possibly data messages) sent from an MS to a new SGSN when the messages contain a Foreign TLLI and/or a Random TLLI. This means that messages sent within a RAU procedure when the Routing Area has changed and messages within an Attach procedure are re-routed to a new SGSN.
Step 4 in Fig. 7: RNC notices itself or is informed by a signalling message or via Operation and Maintenance that SGSN1 is unavailable for some or all values of the parameter that is used to route MS originated messages to a specific SGSN.
   The RNC will optionally release the RRC connections for the concerned MSs, if they exist, and route the next MS originated "initial request" signalling messages from the concerned MSs to another SGSN.
Step 4 in Fig. 8: RNC notices itself or is informed by a signalling message or via Operation and Maintenance that SGSN1 is unavailable for some or all values of the parameter that is used to route MS originated messages to a specific SGSN.
   The RNC will optionally release the RRC connections for the concerned MSs, if they exist, and route the next MS originated "initial request" signalling messages from the concerned MSs to another SGSN.
Step 4 in Fig. 9: RNC notices itself or is informed by a signalling message or via Operation and Maintenance that SGSN1 is unavailable for some or all values of the parameter that is used to route MS originated messages to a specific SGSN.

## Claims

1. A method for improving the connectivity in a General Packet Radio Service mobile communication network which includes at least a first domain, in which domain a Mobile Station (MS) is connected to a radio network node (RNC/BSC) that forwards traffic between the Mobile Station (MS) and a first node in the core network, wherein the radio network node (RNC/BSC) is connected to the first core network node (MSC/SGSN1) in said domain and at least a second core network node (MSC/SGSN2) in said domain,
**characterized in that** if the radio network node (RNC/BSC) detects that said first core network node (MSC/SGSN1) or the link to said first core network node (MSC/SGSN1) is unavailable, the radio network node (RNC/BSC) routes the traffic from the Mobile Station (MS) to said second core network node (MSC/SGSN2) via the connection between the radio network node (RNC/BSC) and said second core network node(MSG/SGSN2).

2. The method according to claim 1,
**characterized in that** said second core network node (MSC/SGSN2) orders the Mobile Station (MS) to disconnect itself and if the Mobile Station (MS) attempts to reconnect, the radio network node (RNC/BSC) will route the attempt to said second core network node (MSC/SGSN2) and the Mobile Station (MS) will then be connected to said second core network node (MSC/SGSN2).

3. The method according to claim 1,
**characterized in that** said second core network node (MSC/SGSN2) initiates a procedure in order to change the connection of the Mobile Station (MS) from being attached to the first core network node (MSC/SGSN1) to being attached to the second core network node (MSC/SGSN2).

4. The method as claimed in claim 3,
**characterized in that** the radio network node (RNC/BSC), when re-routing the traffic to a second core network node (MSC/SGSN2), includes a parameter to indicate if a change of core network node should be attempted, or should be possible.

5. The method as claimed in claim 3 or 4,
**characterized in that** said procedure is based on the existing Inter Serving General Packet Radio Service Support Node Routing Area Update procedure.

6. The method as claimed in claim 3 or 4,
**characterized in that** the radio network node (RNC/BSC), when re-routing Mobile Station (MS) originated traffic or messages to said second core network node (MSC/SGSN2) instead of said first core network node (MSC/SGSN1), only re-routes messages having a Foreign Temporary Logical Link Identity and/or a Random Temporary Logical Link Identity to said second core network node (MSC/SGSN2), while continuing to route messages having a Local Temporary Logical Link Identity to said first core network node (MSC/SGSN1).

7. The method as claimed in claim 6,
**characterized in that** the radio network node (RNC/BSC) can have one or more routing configurations, and where the messages having a Local Temporary Logical Link Identity have a different routing than messages having a Foreign Temporary Logical Link Identity and/or a Random Temporary Logical Link Identity.

8. The method as claimed in one of the preceding claims,
**characterized in that** said mobile communication network is a GSM network, said radio network node (RNC/BSC) is a Base Station Controller, and said core network nodes being Mobile Services Switching Centres and/or Serving General Packet Radio Service Support Nodes.

9. The method as claimed in claim 8,
**characterized in that** messages from the Mobile Station (MS) includes a parameter identifying the core network node it is currently attached to.

10. The method as claimed in claim 9,
**characterized in that** said parameter is the Temporary Logical Link Identity parameter.

11. The method as claimed in claim 2,
**characterized in that** said network is a UMTS GPRS mobile communication network, the radio network node (RNC/BSC) is a Radio Network Controller, the first core network node (MSC/SGSN1) is a first Serving General Packet Radio Service Support Node, the second core network node (MSC/SGSN2) is a second Serving General Packet Radio Service Support Node, and if the Radio Network Controller detects that said first Serving General Packet Radio Service Support Node or the link to said first Serving General Packet Radio Service Support Node is unavailable, the Radio Network Controller forwards any message from the Mobile Station (MS) to the second Serving General Packet Radio Service Support Node in said domain.

12. The method as claimed in claim 11,
**characterized in that** said message is a Service Request message.

13. The method as claimed in claim 3, 4 or 5
**characterized in that** said network is a UMTS GPRS mobile communication network.

14. The method as claimed in claim 3,
**characterized in that** said network is a UMTS GPRS mobile communication network, the first core network node (MSC/SGSN1) is a first Serving General Packet Radio Service Support Node, the second core network node (MSC/SGSN2) is a second Serving General Packet Radio Service Support Node, and if the Radio Network Controller detects that said first Serving General Packet Radio Service Support Node or the link to said first Serving General Packet Radio Service Support Node is unavailable, the Radio Network Controller forwards any message from the Mobile Station to the second Serving General Packet Radio Service Support Node in said domain, said second core network node (MSC/SGSN2)-additionally or alternatively to the initiation of the procedure - continues the initiated procedure, in order to change the connection of the Mobile Station (MS) from being attached to the first core network node (MSC/SGSN1) to being attached to the second core network node (MSC/SGSN2).

15. The method as claimed in claim 14,
**characterized in that** said message is a Service Request message, an Attach Request message or a Routing Area Update Request message.

16. The method as claimed in claim 15,
**characterized in that** when said message is a Service Request message, said procedure is based on the existing Inter Serving General Packet Radio Service Support Node Routing Area Update procedure.

17. The method as claimed in claim 1,
**characterized in that** the radio network node (RNC/BSC) initiates a handover procedure to change the connection of the Mobile Station (MS) from being connected to the said first core network node (MSC/SGSN1) to being connected to the second core network node (MSC/SGSN2) in said domain.

18. The method as claimed in claim 17,
**characterized in that** said handover procedure is initiated by the radio network node (RNC/BSC) issuing a message to the said first core network node(MSC/SGSN1), in which message is included a parameter identifying which core network node to which the Mobile Station (MS) should attach.

19. The method as claimed in claim 18,
**characterized in that** said handover procedure is initiated by the radio network node (RNC/BSC) issuing a message to the said first core network node (MSC/SGSN1), in which message is included a parameter indicating that a change of core network node is required or wanted, whereupon said first core network node (MSC/SGSN1) decides which new core network node should be the target core network node.

20. The method as claimed in claim 17, 18 or 19,
**characterized in that** in said handover procedure that moves the attachment of the Mobile Station (MS) from the first core network node (MSC/SGSN1) to the second core network node (MSC/SGSN2), the target radio network node or Target ID is set equal to the source radio network node or Source ID.

21. The method as claimed in claim 17, 18, 19 or 20,
**characterized in that** said network is a UMTS GPRS mobile communication network, said radio network node (RNC/BSC) is a Radio Network Controller, and said first core network node (MSC/SGSN1) is a first Serving General Packet Radio Service Support Node in the core network.

22. The method as claimed in claim 21,
**characterized in that** in case the Radio Network Controller detects that said first core network node (MSC/SGSN1) or the link to said first core network node (MSC/SGSN1) is unavailable, the radio network node (RNC/BSC) initiates a Serving Radio Network Subsystem Relocation procedure to attach the Mobile Station (MS) to a second Serving General Packet Radio Service Support Node in said first domain.

23. The method as claimed in claim 22,
**characterized in that** said Serving Radio Network Subsystem Relocation procedure moves Mobility Management and Packet Data Protocol contexts for the Mobile Station (MS) from the first Serving General Packet Radio Service Support Node to the second Serving General Packet Radio Service Support Node, in said procedure the target Radio Network Controller or Target ID is set equal to the source Radio Network Controller or Source ID.

24. The method as claimed in claim 22 or 23,
**characterized in that** said : Relocation procedure is initiated by the Radio Network Controller issuing a Relocation Required message, in which message is included a parameter identifying which Serving General Packet Radio Service Support Node the Mobile Station (MS) should attach to.

25. The method as claimed in claim 22 or 23,
**characterized in that** said : Relocation procedure is initiated by the Radio Network Controller issuing a Relocation Required message, in which message is included a parameter indicating that a change of Serving General Packet Radio Service Support Node is required, whereupon said first Serving General Packet Radio Service Support Node decides which new Serving General Packet Radio Service Support Node should be the target Serving General Packet Radio Service Support Node.

26. The method as claimed in claim 17, 18, 19 or 20,
**characterized in that** said mobile communication network is a GSM network, said radio network node (RNC/BSC) is a Base Station Controller, and said core network nodes being Mobile Services Switching Centres and/or Serving General Packet Radio Service Support Nodes.

27. A General Packet Radio Service mobile communication network for providing improved connectivity, and including at least a first domain, wherein the radio network node is adapted to be connected to a first core network node (MSC/SGSN1) in said domain and at least a second core network node (MSC/SGSN2) in said domain and wherein the radio network node (RNC/BSC) is adapted to forward traffic from a mobile station (MS) to said first core network node (MSC/SGSN1), wherein the mobile communication network comprises means adapted to perform the steps of a method according to any of the preceding claims.

28. A radio network node (RNC/BSC) for improving the connectivity in a General Packet Radio Service mobile communication network including at least a first domain, wherein the radio network node (RNC/BSC) is connected to a first core network node (MSC/SGSN1) in said domain and at least a second core network node (MSC/SGSN2) in said domain and wherein the radio network node (RNC/BSC) is adapted to forward traffic from a mobile station (MS) to said first core network node (MSC/SGSN1),
**characterized in that** the radio network node (RNC/BSC) is adapted to detect if said first core network node (MSC/SGSN1) or the link to said first core network node (MSC/SGSN1) is unavailable, and if said first core network node (MSC/SGSN1) or the link to said first core network node (MSC/SGSN1) is unavailable, to route said traffic from the Mobile Station (MS) to said second core network node (MSC/SGSN2) via the connection between the radio network node (RNC/BSC) and said second core network node (MSC/SGSN2).

29. The radio network node (RNC/BSC) according to claim 28, wherein the radio network node (RNC/BSC) comprises means adapted to perform the steps related to the radio network node (RNC/BSC) of a method according to any of the claims 2 to 26.

## Patentansprüche

1. Verfahren zum Verbessern der Verbindungsfähigkeit in einem den allgemeinen paketvermittelten Funkdienst unterstützenden Mobilkommunikationsnetz, das wenigstens eine erste Domäne umfasst, wobei in der Domäne eine Mobilstation (MS) mit einem Funknetzknoten (RNC/BSC) verbunden ist, der Verkehr zwischen der Mobilstation (MS) und einem ersten Knoten im Kernnetz übermittelt, wobei der Funknetzknoten (RNC/BSC) mit dem ersten Kernnetzknoten (MSC/SGSN1) in der Domäne und wenigstens einem zweiten Kernnetzknoten (MSC/SGSN2) in der Domäne verbunden ist,
**dadurch gekennzeichnet, dass**, wenn der Funknetzknoten (RNC/BSC) erfasst, dass der erste Kernnetzknoten (MSC/SGSN1) oder die Strecke zum ersten Kernnetzknoten (MSC/SGSN1) nicht verfügbar ist, der Funknetzknoten (RNC/BSC) den Verkehr von der Mobilstation (MS) über die Verbindung zwischen dem Funknetzknoten (RNC/BSC) und dem zweiten Kernnetzknoten (MSC/SGSN2) zum zweiten Kernnetzknoten (MSC/SGSN2) leitet.

2. Verfahren nach Anspruch 1,
**dadurch gekennzeichnet, dass** der zweite Kernnetzknoten (MSC/SGSN2) der Mobilstation (MS) befiehlt, ihre Verbindung zu unterbrechen, und, wenn die Mobilstation (MS) versucht, die Verbindung wiederherzustellen, der Funknetzknoten (RNC/BSC) den Versuch zum zweiten Kernnetzknoten (MSC/SGSN2) leitet, woraufhin die Mobilstation (MS) mit dem zweiten Kernnetzknoten (MSC/SGSN2) verbunden wird.

3. Verfahren nach Anspruch 1,
**dadurch gekennzeichnet, dass** der zweite Kernnetzknoten (MSC/SGSN2) eine Prozedur einleitet, um die Verbindung der Mobilstation (MS) von einem Angebundensein an den ersten Kernnetzknoten (MSC/SGSN1) zu einem Angebundensein an den zweiten Kernnetzknoten (MSC/SGSN2) zu wechseln.

4. Verfahren nach Anspruch 3,
**dadurch gekennzeichnet, dass** der Funknetzknoten (RSC/BSC) beim Umleiten des Verkehrs zu einem zweiten Kernnetzknoten (MSC/SGSN2) einen Parameter einbezieht, um anzugeben, ob ein Kernnetzknotenwechsel versucht werden oder möglich sein sollte.

5. Verfahren nach Anspruch 3 oder 4,
**dadurch gekennzeichnet**, das die Prozedur auf der bestehenden Routing-Gebietsaktualisierungsprozedur zwischen versorgenden Unterstützungsknoten des allgemeinen paketvermittelten Funkdienstes basiert.

6. Verfahren nach Anspruch 3 oder 4,
**dadurch gekennzeichnet, dass** der Funknetzknoten (RSC/BSC) beim Umleiten von Verkehr oder Nachrichten, die von der Mobilstation (MS) ausgehen, zum zweiten Kernnetzknoten (MSC/SGSN2) statt dem ersten Kernnetzknoten (MSC/SGSN1) nur Nachrichten mit einer fremden temporären Kennung einer logischen Verbindung und/oder einer zufälligen temporären Kennung einer logischen Verbindung zum zweiten Kernnetzknoten (MSC/SGSN2) umleitet, während er Nachrichten mit einer örtlichen temporären Kennung einer logischen Verbindung weiterhin zum ersten Kernnetzknoten (MSC/SGSN) leitet.

7. Verfahren nach Anspruch 6,
**dadurch gekennzeichnet, dass** der Funknetzknoten (RNC/BSC) eine oder mehr Routing-Konfigurationen aufweisen kann, wobei die Nachrichten mit der örtlichen temporären Kennung einer logischen Verbindung eines anderen Routings als Nachrichten mit der fremden temporären Kennung einer logischen Verbindung und/oder der zufälligen temporären Kennung einer logischen Verbindung aufweisen.

8. Verfahren nach einem der vorstehenden Ansprüche,
**dadurch gekennzeichnet, dass** das Mobilkommunikationsnetz ein GSM-Netz ist, der Funknetzknoten (RNC/BSC) eine Basisstationssteuerung ist und die Kernnetzknoten Mobilfunkvermittlungsstellen und/oder versorgende Unterstützungsknoten des allgemeinen paketvermittelten Funkdienstes sind.

9. Verfahren nach Anspruch 8,
**dadurch gekennzeichnet, dass** Nachrichten von der Mobilstation (MS) einen Parameter umfassen, der den Kernnetzknoten identifiziert, an den sie gerade angebunden ist.

10. Verfahren nach Anspruch 9,
**dadurch gekennzeichnet, dass** der Parameter der Parameter der temporären Kennung der logischen Verbindung ist.

11. Verfahren nach Anspruch 2,
**dadurch gekennzeichnet dass** das Netz ein UMTS-GPRS-Mobilkommunikationsnetz ist, der Funknetzknoten (RNC/BSC) eine Funknetzsteuerung ist, der erste Kernnetzknoten (MSC/SGSN1) ein erster versorgender Unterstützungskoten des allgemeinen paketvermittelten Funkdienstes ist, und der zweite Kernnetzknoten (MSC/SGSN2) ein zweiter versorgender Unterstützungsknoten des allgemeinen paketvermittelten Funkdienstes ist und, wenn die Funknetzsteuerung erfasst, dass der erste versorgende Unterstützungsknoten des allgemeinen paketvermittelten Funkdienstes oder die Strecke zum ersten versorgenden Unterstützungsknoten des allgemeinen paketvermittelten Funkdienstes nicht verfügbar ist, die Funknetzsteuerung jede Nachricht von der Mobilstation (MS) an den zweiten versorgenden Unterstützungsknoten des allgemeinen paketvermittelten Funkdienstes in der Domäne übermittelt.

12. Verfahren nach Anspruch 11,
**dadurch gekennzeichnet, dass** die Nachricht eine Dienstanforderungsnachricht ist.

13. Verfahren nach Anspruch 3, 4 oder 5,
**dadurch gekennzeichnet, dass** das Netz ein UMTS-GPRS-Mobilkommunikationsnetz ist.

14. Verfahren nach Anspruch 3,
**dadurch gekennzeichnet, dass** das Netz ein UMTS-GPRS-Mobilkommunikationsnetz ist, der erste Kernnetzknoten (MSC/SGSN1) ein erster versorgender Unterstützungsknoten des allgemeinen paketvermittelten Funkdienstes ist, der zweite Kernnetzknoten (MSC/SGSN2) ein zweiter versorgender Unterstützungsknoten des allgemeinen paketvermittelten Funkdienstes ist und, wenn die Funknetzsteuerung erfasst, dass der erste versorgende Unterstützungsknoten des allgemeinen paketvermittelten Funkdienstes oder die Strecke zum ersten versorgenden Unterstützungsknoten des allgemeinen paketvermittelten Funkdienstes nicht verfügbar ist, die Funknetzsteuerung jede Nachricht von der Mobilstation an den zweiten versorgenden Unterstützungsknoten des allgemeinen paketvermittelten Funkdienstes in der Domäne übermittelt, wobei der zweite Kernnetzknoten zusätzlich oder alternativ zur Einleitung der Prozedur die eingeleitete Prozedur fortsetzt, um die Verbindung der Mobilstation (MS) von einem Angebundensein an den ersten Kernnetzknoten (MSC/SGSN1) zu einem Angebundensein an den zweiten Kernnetzknoten (MSC/SGSN2) zu wechseln.

15. Verfahren nach Anspruch 14,
**dadurch gekennzeichnet, dass** die Nachricht eine Dienstanforderungsnachricht, eine Anbindungsanforderungsnachricht oder eine Anforderungsnachricht zur Routing-Gebietsaktualisierung ist.

16. Verfahre nach Anspruch 15,
**dadurch gekennzeichnet, dass**, wenn die Nachricht eine Dienstanforderungsnachricht ist, die Prozedur auf der bestehenden Routing-Gebietsaktualisierungsprozedur zwischen versorgenden Unterstützungsknoten des allgemeinen paketvermittelten Paketdienstes basiert.

17. Verfahren nach Anspruch 1,
**dadurch gekennzeichnet, dass** der Funknetzknoten (RNC/BSC) eine Übergabeprozedur einleitet, um die Verbindung der Mobilstation (MS) von einem Verbundensein mit dem ersten Kernnetzknoten (MSC/SGSN1) zu einem Verbundensein mit dem zweiten Kernnetzknoten (MSC/SGSN2) zu wechseln.

18. Verfahren nach Anspruch 17,
**dadurch gekennzeichnet, dass** die Übergabeprozedur durch den Funknetzknoten (RNC/BSC) durch Ausgeben einer Nachricht an den ersten Kernnetzknoten (MSC/SGSN1) eingeleitet wird, wobei in die Nachricht ein Parameter einbezogen ist, der den Kernnetzknoten identifiziert, an welchen sich die Mobilstation (MS) anbinden sollte.

19. Verfahren nach Anspruch 18,
**dadurch gekennzeichnet, dass** die Übergabeprozedur durch den Funknetzknoten (RNC/BSC) durch Ausgeben einer Nachricht an den ersten Kernnetzknoten (MSC/SGSN1) eingeleitet wird, wobei in die Nachricht ein Parameter einbezogen ist, der angibt, dass ein Kernnetzknotenwechsel erforderlich ist oder gewünscht wird, woraufhin der erste Kernnetzknoten (MSC/SGSN1) entscheidet, welcher neue Kernnetzknoten der neue Zielkernnetzknoten sein sollte.

20. Verfahren nach Anspruch 17, 18 oder 19,
**dadurch gekennzeichnet, dass** bei der Übergabeprozedur, welche die Anbindung der Mobilstation (MS) vom ersten Kernnetzknoten (MSC/SGSN1) zum zweiten Kernnetzknoten (MSC/SGSN2) verschiebt, der Zielfunknetzknoten oder eine Ziel-ID so festgelegt wird, dass sie gleich dem Ursprungsfunknetzknoten oder einer Ursprungs-ID ist.

21. Verfahren nach Anspruch 17, 18, 19 oder 20,
**dadurch gekennzeichnet, dass** das Netz ein UMTS-GPRS-Mobilkommunikationsnetz ist, der Funknetzknoten (RC/BSC) eine Funknetzsteuerung ist und der erste Kernnetzknoten (MSC/SGSN1) ein erster versorgender Unterstützungsknoten des allgemeinen paketvermittelten Funkdienstes im Kernnetz ist.

22. Verfahren nach Anspruch 21,
**dadurch gekennzeichnet, dass**, falls die Funknetzsteuerung erfasst, dass der erste Kernnetzknoten (MSC/SGSN1) oder die Strecke zum ersten Kernnetzknoten (MSC/SGSN) nicht verfügbar ist, die Funknetzsteuerung eine Prozedur zur Verlagerung des versorgenden Funknetzteilsystems einleitet, um die Mobilstation (MS) an einen zweiten versorgenden Unterstützungsknoten des allgemeinen paketvermittelten Funkdienstes in der Domäne anzuschließen.

23. Verfahren nach Anspruch 22,
**dadurch gekennzeichnet, dass** die Prozedur zur Verlagerung des versorgenden Funknetzteilsystems Mobilitätsmanagement- und Paketdatenprotokollkontexte für die Mobilstation (MS) vom ersten versorgenden Unterstützungsknoten des allgemeinen paketvermittelten Funkdienstes zum zweiten versorgenden Unterstützungsknoten des allgemeinen paketvermittelten Funkdienstes verschiebt, wobei in der Prozedur die Zielfunknetzsteuerung oder eine Ziel-ID so festlegt wird, dass sie gleich der Ursprungsfunknetzsteuerung oder einer Ursprungs-ID ist.

24. Verfahren nach Anspruch 22 oder 23,
**dadurch gekennzeichnet, dass** die Verlagerungsprozedur durch die Funknetzsteuerung durch Ausgeben einer Verlagerungsanforderungsnachricht eingeleitet wird, wobei in die Nachricht ein Parameter einbezogen ist, der den versorgenden Unterstützungsknoten des allgemeinen paketvermittelten Funkdienstes identifiziert, an welchen sich die Mobilstation (MS) anbinden sollte.

25. Verfahren nach Anspruch 22 oder 23,
**dadurch gekennzeichnet, dass** die Verlagerungsprozedur durch die Funknetzsteuerung durch Ausgeben einer Verlagerungsanforderungsnachricht eingeleitet wird, wobei in die Nachricht ein Parameter einbezogen ist, der angibt, dass ein Wechsel des versorgenden Unterstützungsknoten des allgemeinen paketvermittelten Funkdienstes erforderlich ist, woraufhin der erste versorgende Unterstützungsknoten des allgemeinen paketvermittelten Funkdienstes entscheidet, welcher neue versorgende Unterstützungsknoten des allgemeinen paketvermittelten Funkdienstes der versorgende Zielunterstützungsknoten des allgemeinen paketvermittelten Funkdienstes sein sollte.

26. Verfahren nach Anspruch 17, 18, 19 oder 20,
**dadurch gekennzeichnet, dass** das Mobilkommunikationsnetz ein GSM-Netz ist, der Funknetzknoten (RNC/BSC) eine Basisstationssteuerung ist und die Kernnetzknoten Mobilfunkvermittlungsstellen und/oder versorgende Unterstützungsknoten des allgemeinen paketvermittelten Funkdienstes sind.

27. Mobilkommunikationsnetz, das den allgemeinen paketvermittelten Funkdienst unterstützt, zum Bereitstellen einer verbesserten Verbindungsfähigkeit und umfassend wenigstens eine erste Domäne, wobei der Funknetzknoten (RNC/BSC) so ausgelegt ist, dass er mit einem ersten Kernnetzknoten (MSC/SGSN1) in der Domäne und wenigstens einem zweiten Kernnetzknoten (MSC/SGSN2) in der Domäne verbunden ist, und wobei der Funknetzknoten (RNC/BSC) so ausgelegt ist, dass er Verkehr von einer Mobilstation (MS) an den ersten Kernnetzknoten (MSC/SGSN1) übermittelt, wobei das Mobilkommunikationsnetz Mittel umfasst, die so ausgelegt sind, dass sie die Schritte eines Verfahrens nach einem der vorhergehenden Ansprüche ausführen.

28. Funknetzknoten (RNC/BSC) zum Verbessern der Verbindungsfähigkeit in einem den allgemeinen paketvermittelten Funkdienst unterstützenden Mobilkommunikationsnetz, das wenigstens eine erste Domäne umfasst, wobei der Funknetzknoten (RNC/BSC) mit einem ersten Kernnetzknoten (MSC/SGSN1) in der Domäne und wenigstens einem zweiten Kernnetzknoten (MSC/SGSN2) in der Domäne verbunden ist, und wobei der Funknetzknoten (RNC/BSC) so ausgelegt ist, dass er Verkehr von einer Mobilstation (MS) an den ersten Kernnetzknoten (MSC/SGSN1) übermittelt,
**dadurch gekennzeichnet, dass** der Funknetzknoten (RNC/BSC) so ausgelegt ist, dass er erfasst, wenn der erste Kernnetzknoten (MSC/SGSN1) oder die Strecke zum ersten Kernnetzknoten (MSC/SGSN1) nicht verfügbar ist, und, wenn der erste Kernnetzknoten (MSC/SGSN1) oder die Strecke zum ersten Kernnetzknoten (MSC/SGSN1) nicht verfügbar ist, den Verkehr von der Mobilstation (MS) über die Verbindung zwischen dem Funknetzknoten (RNC/BSC) und dem zweiten Kernnetzknoten (MSC/SGSN2) zum zweiten Kernnetzknoten (MSC/SGSN2) leitet.

29. Funknetzknoten (RNC/BSC) nach Anspruch 28, wobei der Funknetzknoten (RNC/BSC) Mittel umfasst, die so ausgelegt sind, dass sie die auf den Funknetzknoten (RNC/BSC) bezogenen Schritte eines Verfahrens nach einem der Ansprüche 2 bis 26 ausführen.

## Revendications

1. Procédé pour améliorer la connectivité dans un réseau de communication mobile GPRS (General Packet Radio Service) qui inclut au moins un premier domaine, dans lequel domaine une station mobile (MS) est connectée à un noeud de réseau radio (RNC/BSC) qui achemine le trafic entre la station mobile (MS) et un premier noeud dans le réseau central, dans lequel le noeud de réseau radio (RNC/BSC) est connecté au premier noeud de réseau central (MSC/SGSN1) dans ledit domaine et à au moins un second noeud de réseau central (MSC/SGSN2) dans ledit domaine,
**caractérisé en ce que** si le noeud de réseau radio (RNC/BSC) détecte que ledit premier noeud de réseau central (MSC/SGSN1) ou la liaison audit premier noeud de réseau central (MSC/SGSN1) est indisponible, le noeud de réseau radio (RNC/BSC) route le trafic de la station mobile (MS) vers ledit second noeud de réseau central (MSC/SGSN2) via la connexion entre le noeud de réseau radio (RNC/BSC) et ledit second noeud de réseau central (MSC/SGSN2).

2. Procédé selon la revendication 1,
**caractérisé en ce que** ledit second noeud de réseau central (MSC/SGSN2) ordonne à la station mobile (MS) de se déconnecter et si la station mobile (MS) tente de se reconnecter, le noeud de réseau radio (RNC/BSC) routera la tentative vers ledit second noeud de réseau central (MSC/SGSN2) et la station mobile (MS) sera ensuite connectée audit second noeud de réseau central (MSC/SGSN2).

3. Procédé selon la revendication 1,
**caractérisé en ce que** ledit second noeud de réseau central (MSC/SGSN2) lance une procédure afin de modifier la connexion de la station mobile (MS) d'un rattachement au premier noeud de réseau central (MSC/SGSN1) à un rattachement au second noeud de réseau central (MSC/SGSN2).

4. Procédé selon la revendication 3,
**caractérisé en ce que** le noeud de réseau radio (RNC/BSC), lors du re-routage du trafic vers un second noeud de réseau central (MSC/SGSN2), inclut un paramètre afin d'indiquer si une modification de noeud de réseau central devrait être tentée, ou devrait être possible.

5. Procédé selon la revendication 3 ou 4,
**caractérisé en ce que** ladite procédure est basée sur la procédure existante de mise à jour de zone de routage entre noeuds de support GPRS de desserte.

6. Procédé selon la revendication 3 ou 4,
**caractérisé en ce que** le noeud de réseau radio (RNC/BSC), lors du re-routage du trafic émanant de la station mobile (MS) ou des messages vers ledit second noeud de réseau central (MSC/SGSN2) au lieu dudit premier noeud de réseau central (MSC/SGSN1), re-route seulement les messages ayant une identité de liaison logique temporaire étrangère et/ou une identité de liaison logique temporaire aléatoire vers ledit second noeud de réseau central (MSC/SGSN2), tout en continuant à router les messages ayant une identité de liaison logique temporaire locale vers ledit premier noeud de réseau central (MSC/SGSN1).

7. Procédé selon la revendication 6,
**caractérisé en ce que** le noeud de réseau radio (RNC/BSC) peut avoir une ou plusieurs configurations de routage et où les messages ayant une identité de liaison logique temporaire locale ont un routage différent des messages ayant une identité de liaison logique temporaire étrangère et/ou une identité de liaison logique temporaire aléatoire.

8. Procédé selon une des revendications précédentes,
**caractérisé en ce que** ledit réseau de communication mobile est un réseau GSM, ledit noeud de réseau radio (RNC/BSC) est un contrôleur de station de base, et lesdits noeuds de réseau central sont des centres de commutation pour les services mobiles et/ou des noeuds de support GPRS de desserte.

9. Procédé selon la revendication 8,
**caractérisé en ce que** les messages provenant de la station mobile (MS) incluent un paramètre identifiant le noeud de réseau central auquel elle est actuellement rattachée.

10. Procédé selon la revendication 9,
**caractérisé en ce que** ledit paramètre est le paramètre d'identité de liaison logique temporaire.

11. Procédé selon la revendication 2,
**caractérisé en ce que** ledit réseau est un réseau de communication mobile UMTS GPRS, le noeud de réseau radio (RNC/BSC) est un contrôleur de réseau radio, le premier noeud de réseau central (MSC/SGSN1) est un premier noeud de support GPRS de desserte, le second noeud de réseau central (MSC/SGSN2) est un second noeud de support GPRS de desserte, et si le contrôleur de réseau radio détecte que ledit premier noeud de support GPRS de desserte ou la liaison vers ledit premier noeud de support GPRS de desserte est indisponible, le contrôleur de réseau radio achemine n'importe quel message provenant de la station mobile (MS) vers le second noeud de support GPRS de desserte dans ledit domaine.

12. Procédé selon la revendication 11,
**caractérisé en ce que** ledit message est un message de demande de service.

13. Procédé selon la revendication 3, 4 ou 5,
**caractérisé en ce que** ledit réseau est un réseau de communication mobile UMTS GPRS.

14. Procédé selon la revendication 3,
**caractérisé en ce que** ledit réseau est un réseau de communication mobile UMTS GPRS, le premier noeud de réseau central (MSC/SGSN1) est un premier noeud de support GPRS de desserte, le second noeud de réseau central (MSC/SGSN2) est un second noeud de support GPRS de desserte, et si le contrôleur de réseau radio détecte que ledit premier noeud de support GPRS de desserte ou la liaison vers ledit premier noeud de support GPRS de desserte est indisponible, le contrôleur de réseau radio achemine n'importe quel message provenant de la station mobile vers le second noeud de support GPRS de desserte dans ledit domaine, ledit second noeud de réseau central (MSC/SGSN2) - en plus ou en variante du lancement de la procédure - poursuit la procédure amorcée, de manière à modifier la connexion de la station mobile (MS) d'un rattachement au premier noeud de réseau central (MSC/SGSN1) à un rattachement au second noeud de réseau central (MSC/SGSN2).

15. Procédé selon la revendication 14,
**caractérisé en ce que** ledit message est un message de demande de service, un message de demande de rattachement ou un message de demande de mise à jour de zone de routage.

16. Procédé selon la revendication 15,
**caractérisé en ce que** lorsque ledit message est un message de demande de service, ladite procédure est basée sur la procédure existante de mise à jour de zone de routage entre noeuds de support GPRS de desserte.

17. Procédé selon la revendication 1,
**caractérisé en ce que** le noeud de réseau radio (RNC/BSC) lance une procédure de transfert afin de modifier la connexion de la station mobile (MS) d'une connexion audit premier noeud de réseau central (MSC/SGSN1) à une connexion audit second noeud de réseau central (MSC/SGSN2) dans ledit domaine.

18. Procédé selon la revendication 17,
**caractérisé en ce que** ladite procédure de transfert est lancée par le noeud de réseau radio (RNC/BSC) émettant un message vers ledit premier noeud de réseau central (MSC/SGSN1), message dans lequel est inclus un paramètre identifiant à quel noeud de réseau central la station mobile (MS) devrait se rattacher.

19. Procédé selon la revendication 18,
**caractérisé en ce que** ladite procédure de transfert est lancée par le noeud de réseau radio (RNC/BSC) émettant un message vers ledit premier noeud de réseau central (MSC/SGSN1), message dans lequel est inclus un paramètre indiquant qu'une modification du noeud de réseau central est nécessaire ou souhaitée, après quoi ledit premier noeud de réseau central (MSC/SGSN1) décide quel nouveau noeud de réseau central devrait être le noeud de réseau central cible.

20. Procédé selon la revendication 17, 18 ou 19,
**caractérisé en ce que** dans le cadre de ladite procédure de transfert qui déplace le rattachement de la station mobile (MS) du premier noeud de réseau central (MSC/SGSN1) au second noeud de réseau central (MSC/SGSN2), le noeud de réseau radio cible ou l'ID cible est défini comme état égal au noeud de réseau radio source ou à l'ID source.

21. Procédé selon la revendication 17, 18, 19 ou 20,
**caractérisé en ce que** ledit réseau est un réseau de communication mobile UMTS GPRS, ledit noeud de réseau radio (RNC/BSC) est un contrôleur de réseau radio, et ledit premier noeud de réseau central (MSC/SGSN2) est un premier noeud de support GPRS de desserte dans le réseau central.

22. Procédé selon la revendication 21,
**caractérisé en ce que** au cas où le contrôleur de réseau radio détecte que ledit premier noeud de réseau central (MSC/SGSN1) ou la liaison audit premier noeud de réseau central (MSC/SGSN1) est indisponible, le noeud de réseau radio (RNC/BSCQ) lance une procédure de relocalisation de sous-système de réseau radio de desserte afin de rattacher la station mobile (MS) à un second noeud de support GPRS de desserte dans ledit premier domaine.

23. Procédé selon la revendication 22,
**caractérisé en ce que** ladite procédure de relocalisation de sous-système de réseau radio de desserte déplace les contextes de gestion de mobilité et de protocole de paquets de données de la station mobile (MS) du premier noeud de support GPRS de desserte au second noeud de support GPRS de desserte, dans le cadre de ladite procédure le contrôleur de réseau radio cible ou l'ID cible est défini comme étant égal au contrôleur de réseau radio source ou à l'ID source.

24. Procédé selon la revendication 22 ou 23,
**caractérisé en ce que** ladite procédure de relocalisation est lancée par le contrôleur de réseau radio émettant un message Relocalisation Nécessaire, message dans lequel est inclus un paramètre identifiant à quel noeud de support GPRS de desserte la station mobile (MS) devrait se rattacher.

25. Procédé selon la revendication 22 ou 23,
**caractérisé en ce que** ladite procédure de relocalisation est lancée par le contrôleur de réseau radio émettant un message Relocalisation Nécessaire, message dans lequel est inclus un paramètre indiquant qu'une modification de noeud de support GPRS de desserte est nécessaire, après quoi ledit noeud de support GPRS de desserte décide quel nouveau noeud de support GPRS de desserte devrait être le noeud de support GPRS de desserte cible.

26. Procédé selon la revendication 17, 18, 19 ou 20,
**caractérisé en ce que** ledit réseau de communication mobile est un réseau GSM, ledit noeud de réseau radio (RNC/BSC) est un contrôleur de station de base, et lesdits noeuds de réseau central sont des centre de commutation pour les services mobiles et/ou des noeuds de support GPRS de desserte.

27. Réseau de communication mobile GPRS pour fournir une connectivité améliorée et incluant au moins un premier domaine, dans lequel le noeud de réseau radio (RNC/BSC) est adapté afin d'être connecté à un premier noeud de réseau central (MSC/SGSN1) dans ledit domaine et à au moins un second noeud de réseau central (MSC/SGSN2) dans ledit domaine et dans lequel le noeud de réseau radio (RNC/BSC) est adapté afin d'acheminer le trafic d'une station mobile (MS) vers ledit premier noeud de réseau central (MSC/SGSN1), dans lequel le réseau de communication mobile comprend des moyens adaptés afin de mettre en oeuvre les étapes d'un procédé selon une quelconque des revendications précédentes.

28. Noeud de réseau radio (RNC/BSC) pour améliorer la connectivité dans un réseau de communication mobile GPRS incluant au moins un premier domaine, dans lequel le noeud de réseau radio (RNC/BSC) est connecté à un premier noeud de réseau central (MSC/SGSN1) dans ledit domaine et à au moins un second noeud de réseau central (MSC/SGSN2) dans ledit domaine et dans lequel le noeud de réseau radio (RNC/BSC) est adapté afin d'acheminer le trafic d'une station mobile (MS) vers ledit premier noeud de réseau central (MSC/SGSN1),
**caractérisé en ce que** le noeud de réseau radio (RNC/BSC) est adapté afin de détecter si ledit premier noeud de réseau central (MSC/SGSN1) ou la liaison vers ledit premier noeud de réseau central (MSC/SGSN1) est indisponible, et si ledit premier noeud de réseau central (MSC/SGSN1) ou la liaison vers ledit premier noeud de réseau central (MSC/SGSN1) est indisponible, de router ledit trafic de la station mobile (MS) audit second noeud de réseau central (MSC/SGSN2) via la connexion entre le noeud de réseau radio (RNC/BSC) et ledit second noeud de réseau central (MSC/SGSN2).

29. Noeud de réseau radio (RNC/BSC) selon la revendication 28, dans lequel le noeud de réseau radio (RNC/BSC) comprend des moyens adaptés afin de mettre en oeuvre les étapes relatives au noeud de réseau radio (RNC/BSC) d'un procédé selon une quelconque des revendications 2 à 26.
